# FASCICULE DE BREVET EUROPEEN

(11) **EP 3 987 384 B1**
(45) Date de publication et mention de la délivrance du brevet: **06.11.2024**
(21) Numéro de dépôt: 20747030.3
(22) Date de dépôt: 24.06.2020
(51) Int. Cl.: G06F 3/01, G06F 3/04847, G06F 3/0362, B60K 35/10, B60K 35/25

(54) **DISPOSITIF DE COMMANDE DESTINÉ À COMMANDER UNE FONCTION D'UN HABITACLE DE VÉHICULE**
STEUERVORRICHTUNG ZUR STEUERUNG EINER FUNKTION EINES FAHRZEUGINNENRAUMES
CONTROL DEVICE TO CONTROL A FUNCTION OF THE INTERIOR OF A VEHICLE

(30) Priorité: 24.06.2019 FR 1906784
(43) Date de publication de la demande: 27.04.2022
(73) Titulaire: NOVARES France, 78140 Vélizy-Villacoublay (FR); Commissariat à l'Energie Atomique et aux Energies Alternatives, 75015 Paris (FR)
(72) Inventeur: BOLLIER, François, 06300 NICE (FR); REICHHELD, Frédérick, 06500 MENTON (FR); CAZES, Christophe, 78000 VERSAILLES (FR); BOLZMACHER, Christian, 92120 MONTROUGE (FR); HAFEZ, Moustapha, 94110 ARCUEIL (FR); ECK, Laurent, 28410 SAINT LUBIN DE LA HAYE (FR)
(74) Mandataire: Germain Maureau
(86) Numéro de dépôt international: PCT/FR2020/051097
(87) Numéro de publication internationale: WO 2020/260820

(56) Documents cités:
- WO-A1-2018/011522
- DE-A1- 102016 121 076
- FR-A1- 3 056 469
- US-A1- 2007 146 343
- US-A1- 2009 244 017
- US-A1- 2017 024 058

## Description

La présente invention se rapporte au domaine des interfaces de commande des fonctions d'habitacle de véhicule.

La conduite d'un véhicule automobile implique des interactions entre le conducteur et le véhicule et, à ce titre, un véhicule automobile est pourvu de différents organes de commande disséminés dans l'habitacle du véhicule.

Les organes de commandes comprennent traditionnellement des boutons poussoirs ou rotatifs, des curseurs sur lesquels agit le conducteur ou un passager pour piloter des fonctions du véhicule telles que le système d'info-divertissement, l'éclairage, le verrouillage centralisé, la climatisation...

Au cours des dernières années, on a assisté à la transformation des organes de commande essentiellement mécaniques à base de bouton, tringle, câble en interface de commande numérique dans lesquels la commande du conducteur ou passager est convertie en un signal électrique qu'un calculateur traite pour agir sur un actuateur qui transcrit l'instruction donnée par le conducteur ou passager.

Les interfaces de commande multifonctions sont utilisées pour commander des systèmes électriques ou électroniques, tels qu'un système de climatisation, un système audio ou encore un système de navigation. Les interfaces de commande peuvent être généralement associées à un écran tactile généralement capacitif et permettent une navigation dans des menus déroulants.

Cependant, en présence de fonctions de plus en plus nombreuses, il est nécessaire d'améliorer l'ergonomie des interfaces homme-machine. Lorsqu'un utilisateur appuie sur la surface tactile, on peut déterminer la localisation de la pression où la force est exercée. Dans ce cas, un appui de l'utilisateur est par exemple associé à la sélection d'une commande. En outre, pour signaler à l'utilisateur que sa commande a bien été prise en compte, que cela soit en situation normale de conduite ou d'arrêt mais également en situation dégradée (manipulation en aveugle, charge cognitive importante), il est important que l'utilisateur ait un retour haptique de manière à rester concentré sur la route en diminuant l'effort cognitif associé à la vérification de la réalisation de son action sur la surface tactile.

Pour cela, on connaît déjà des modules de commande dite à retour haptique comportant des actionneurs, tels que des actionneurs électromagnétiques, reliés au module d'interface pour transmettre un mouvement de vibrations, de manière que l'utilisateur perçoive un retour haptique l'informant que sa commande a bien été prise en compte. Le document DE10 2016 121 076 A1 décrit un dispositif de commande pour un véhicule, le dispositif comportant un châssis avec une surface frontale d'affichage, par exemple un écran tactile, et un élément de commande, positionné ou pouvant être positionné sur ladite surface, pour commander une fonction ou ajuster des paramètres de fonctions du véhicule représentés par des champs tactiles de l'écran. L'élément de commande peut être un élément rotatif, comporter un capteur de rotation et être pourvu d'une fonction de retour de force. L'actionnement manuel d'un champ tactile peut être accompagné d'un retour tactile par l'écran tactile.

Un but de la présente invention est de proposer un dispositif de commande amélioré et moins complexe.

A cet effet, la présente invention propose un dispositif de commande destiné à commander une fonction d'un habitacle de véhicule, tel que défini dans la revendication 1, le dispositif de commande comprenant :
- un module d'interface utilisateur configuré pour une sélection par l'utilisateur d'une fonction parmi un ensemble de fonctions de l'habitacle,
- un unique module haptique configuré pour fournir à un utilisateur un retour haptique parmi une pluralité de retours haptiques, et
- une unité centrale comprenant une librairie de motifs de retours haptiques, chaque motif de retour haptique étant associé à une fonction, l'unité centrale étant configurée pour sélectionner, dans la librairie de motifs de retours haptiques, le motif de retour haptique associé à la fonction sélectionnée par l'utilisateur, et pour commander le module haptique pour fournir le retour haptique présentant le motif de retour haptique sélectionné.

Ainsi dans cette configuration, le dispositif de commande permet un retour haptique affiné et dédié à une fonction sélectionnée dans le véhicule. L'attention portée par l'utilisateur à la conduite du véhicule n'est pas diminuée par la commande de la fonction. De plus, le retour haptique étant dédié et différent pour la commande de chacune des fonctions, l'utilisateur analyse rapidement et de façon automatique que la sélection souhaitée a bien été effectuée. Il sait en effet grâce au retour haptique dédié s'il a sélectionné la bonne fonction.

Par le terme 'fonction' on entend dans le présent document, une fonction dans un habitacle de véhicule et dont l'utilisateur peut commander un paramètre par le biais de systèmes électriques ou électroniques, telle que le système de ventilation, système audio, système vidéo, système de téléphonie, système de chauffage, etc...Il peut s'agir de fonctions existantes dans l'habitacle au moment de la commercialisation du véhicule mais le catalogue de fonctions peut être modifié, il peut par exemple proposer de nouvelles fonctions après commercialisation.

Avantageusement, le dispositif de commande est configuré de sorte à accepter des mises à jour, notamment pour accepter et fournir un retour haptique dédié à de nouvelles fonctions.

Ainsi, le dispositif de commande est évolutif et permet une adaptation à des fonctions qui ne seraient pas prévues dans l'habitacle au moment de la commercialisation du véhicule.

Selon une disposition, le module d'interface utilisateur est configuré pour choisir un paramètre parmi un ensemble de paramètres associés à la dite fonction sélectionnée, le module haptique est configuré pour fournir à un utilisateur un retour haptique parmi une pluralité de retours haptiques, et l'unité centrale comprend une librairie de motifs de retours haptiques, chaque motif de retour haptique étant associé à un paramètre de chacune des fonctions, l'unité centrale étant configurée pour sélectionner dans la librairie de motifs de retours haptiques, le motif de retour haptique associé au paramètre choisi par l'utilisateur et commander le module haptique pour fournir le retour haptique présentant le motif de retour haptique sélectionné.

Il est entendu dans la présente demande que le retour haptique associé à un paramètre de chacune des fonctions est un retour haptique paramétral dédié audit paramètre et dont le motif est stocké dans une librairie de motifs de retour haptiques paramétraux dédiée.

Ainsi, le dispositif permet non seulement de sélectioner une fonction parmi d'autres en fournissant une réponse haptique dédiée mais également de sélectionner un paramètre parmi une pluralité de paramètres dédiés à ladite fonction et de fournir un retour haptique spécifique, associé audit paramètre sélectionné.

Par exemple, l'utilisateur sait si après avoir sélectionné une fonction de climatisation, il a sélectionné par erreur le réglage de la température de l'air au lieu de l'intensité de la ventilation, grâce au retour haptique dédié qui lui est fourni. Il peut également calculer mentalement, sans grand effort cognitif, quelle puissance de ventilation il a sélectionné par exemple selon le nombre de crantages ressentis.

On entend dans le présent document par l'expression 'paramètre' une propriété associée à une fonction de l'habitacle. Les paramètres disponibles pour une fonction info-divertissement sont par exemple un paramètre de sélection de hifi, d'une fréquence radio.., le réglage du volume sonore, le réglage des basses etc.. Pour une fonction d'éclairage, les paramètres sont par exemple un paramètre de sélection des zones de l'habitacle à éclairer, de réglage de l'intensité lumineuse, etc...

Le module haptique est un module haptique à actionnement ultrasonique. Ceci facilite la mise en oeuvre du dispositif de commande par comparaison à un module fonctionnant par crantage mécanique qui nécessite de prévoir de nombreuses roues crantées et de pouvoir sélectionner rapidement l'une des roues dédiées. Par ailleurs, cette configuration améliore la compacité du module et ses possibilités d'intégration dans l'habitacle d'un véhicule. En effet, un module haptique à actionnement ultrasonique, tel que par exemple décrit dans le document FR3054072, est de structure simple et peu encombrante. Il est constitué d'un élément d'interaction avec l'utilisateur qui peut être déplacé en rotation ou linéairement par rapport au boîtier du dispositif haptique, une première zone de contact solidaire en mouvement de l'élément d'interaction, une deuxième zone de contact solidaire en mouvement du boitier, au moins un résonateur et des moyens d'excitations du résonnateur à une fréquence de résonance telle qu'elle génère un mode de vibration dans le plan du résonateur et l'apparition d'un phénomène de lubrification entre la première zone de contact et la deuxième zone de contact par apparition d'un glissement dans le plan, ne nécessitant pas un dispositif vibrant épais. Comme la fréquence de résonance utilisée est ultrasonique, elle génère une lubrification ultrasonique transmise à l'élément d'interaction avec l'utilisateur, qui sera dans la suite du document appelé bouton haptique.

Selon une possibilité, le module d'interface utilisateur comprend une dalle tactile capacitive rétroéclairée configurée pour un rétroéclairage de la fonction et/ ou des paramètres de la fonction sélectionnée sur le module d'interface utilisateur.

De préférence, la dalle tactile capacitive comprend :
- un film imprimé de sorte à illustrer des zones de paramétrage associées à des paramètres pour chacune des fonctions,
- un guide de lumière sous-jacent configuré pour réaliser un rétro-éclairage des zones de paramétrage, et
- un capteur capacitif de localisation à l'aplomb du film imprimé et configuré pour sélectionner un paramètre par détection d'un doigt de l'utilisateur sur l'une des zones de paramétrage, le capteur capacitif de localisation communiquant à l'unité centrale le paramètre sélectionné.

Selon l'invention, le module haptique comprend :
- un bouton haptique monté mobile en rotation,
- un capteur de position du bouton haptique configuré pour communiquer une position angulaire et le sens de rotation du bouton haptique à l'unité centrale, et
- un résonateur configuré pour générer des vibrations par application d'un motif de retour haptique présentant une fréquence proche ou égale à la fréquence de résonance par l'unité centrale en réponse au capteur de posisition, de sorte à conduire à une lubrification ultrasonique du bouton haptique.

Avantageusement, le bouton haptique et la dalle tactile capacitive rétroéclairée sont agencés dans une face supérieure d'un châssis et le capteur de position et le résonateur sont agencés dans une face inférieure du châssis opposée à la face supérieure, le châssis étant configuré pour être intégré à une console centrale de l'habitacle ou à un élément de planche de bord de l'habitacle.

Selon une possibilité, le module d'interface utilisateur est configuré pour communiquer avec un terminal de communication mobile et pour recevoir les sélections d'un utilisateur dudit terminal.

Selon une disposition, la surface de la dalle tactile capacitive comprend un revêtement dont la surface est configurée pour recevoir des traitements de surface améliorant le rendu visuel du revêtement tel qu'un rendu de type métal brossé, ou anti trace de doigts.

Le dispositif de commande comprenant un unique module haptique, toutes les fonctions et les paramètres associés sont accessibles par l'utilisateur à partir d'un endroit unique dans l'habitacle, concentrant un grand nombre de possibilités d'actionnement.

Selon un deuxième aspect, la présente invention propose un procédé de conduite d'un véhicule comprenant un habitacle comportant une pluralité de fonctions et un dispositif de commande tels que précédemment décrit, le procédé comprenant :
- une étape de sélection par un utilisateur d'une fonction parmi un ensemble de fonctions de l'habitacle, par l'intermédiaire d'un module d'interface utilisateur du dispositif de commande,
- une étape de sélection par une unité centrale d'un motif de retour haptique associé à la fonction sélectionnée dans une librairie de motifs de retours haptiques,
- une étape de commande d'un unique module haptique par l'unité centrale de sorte à fournir un retour haptique à l'utilisateur présentant le motif de retour haptique sélectionné.

Avantageusement, le procédé précédemment décrit comprend :
- une étape de sélection par un utilisateur d'un paramètre parmi un ensemble de paramètres associés à ladite fonction sélectionnée par l'intermédiaire du module d'interface utilisateur,
- une étape de sélection par l'unité centrale d'un motif de retour haptique associé au paramètre sélectionné par l'utilisateur,
- une étape de commande du module haptique par l'unité centrale de sorte à fournir un retour haptique à l'utilisateur présentant le motif de retour haptique sélectionné.

D'autres aspects, buts et avantages de la présente invention apparaîtront mieux à la lecture de la description suivante d'un mode de réalisation de celle-ci, donnée à titre d'exemple non limitatif et faite en référence aux dessins annexés. Les figures ne respectent pas nécessairement l'échelle de tous les éléments représentés de sorte à améliorer leur lisibilité. Le principe et les conditions d'utilisation sont expliqués ci-après et en référence aux figures, sur lesquelles on peut voir :
[Fig. 1] une vue en éclaté d'un dispositif de commande intégré dans une console centrale ou un élément de planche de bord de l'habitacle d'un véhicule selon un mode de réalisation de l'invention,
[Fig. 2] une vue en coupe illustrant le dispositif de commande selon le mode de réalisation de l'invention illustré à la figure 1,
[Fig. 3] une vue schématique du module d'interface du dispositif de commande selon le mode de réalisation de l'invention illustré à la figure 1, et
[Fig. 4] est une vue en éclaté d'un résonateur d'un module haptique du dispositif de commande selon le mode de réalisation de l'invention illustré à la figure 1.

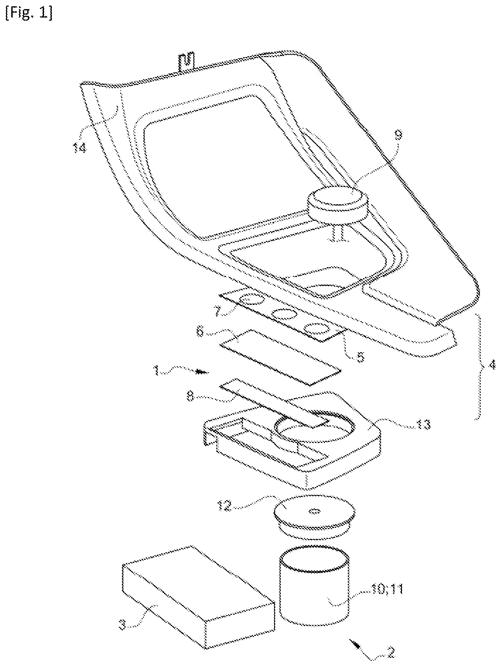

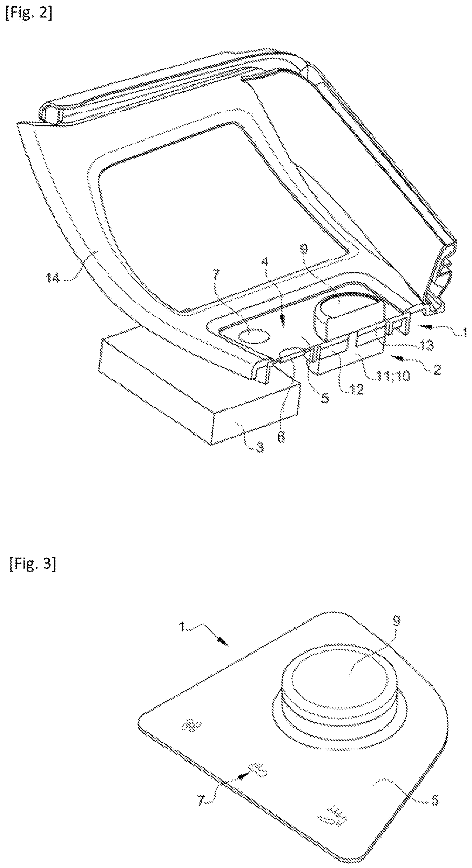

Comme illustré à la figure 1, le dispositif de commande 100 comprend un module d'interface utilisateur 1, un unique module haptique 2 et une unité centrale 3 configurée pour communiquer avec le module d'interface utilisateur 1 et le module haptique 2. Le module d'interface utilisateur 1 est configuré pour une sélection par un utilisateur d'une fonction parmi un ensemble de fonctions de l'habitacle puis de sélectionner un paramètre pour ladite fonction sélectionnée parmi un ensemble de paramètres possibles, spécifiques de ladite fonction. Le module d'interface utilisateur 1 comprend à cet effet une dalle tactile capacitive rétroéclairée 4 dotée, dans une direction allant de sa face supérieure à sa face inférieure, d'un film imprimé 5 illustrant des zones de paramétrages 7 (également visibles en figure 3) associées à des paramètres spécifiques à chacune des fonctions, un guide de lumière 6 permettant le rétroéclairage de zones de paramétrages 7 et un capteur capacitif de localisation 8 à l'aplomb des zones de paramétrages 7 capable de détecter la présence d'un doigt d'un utilisateur sur l'une des zones de paramétrages 7 et d'en informer l'unité centrale 3.

Le module haptique 2 est configuré pour fournir à l'utilisateur un retour haptique parmi une pluralité de retours haptiques possibles présentant chacun un motif de retour haptique dédié. Dans le cadre de l'invention, le module haptique 2 est un module haptique à actionnement ultrasonique. Le module haptique 2 comprend un bouton haptique 9 monté mobile en rotation, un capteur de position 12 qui transmet la position angulaire et le sens de rotation du bouton haptique 9 à l'unité centrale 3 et un boîtier 10 comprenant deux résonateurs 11, commandés par l'unité centrale 3 et capables de générer des vibrations dans un plan en réponse aux informations transmises par le capteur de position 12 à l'unité centrale 3. Les résonateurs 11 sont configurés pour générer des vibrations par application d'un motif de retour haptique présentant une fréquence proche ou égale à la fréquence de résonance par l'unité centrale en réponse au capteur de position 12, de sorte à conduire à une lubrification ultrasonique du bouton haptique 9.

L'unité centrale comprend à cet effet une librairie de motifs de retours haptiques et chacun de ces motifs correspond à une fonction. Ainsi, l'unité centrale reçoit l'information de la sélection d'une fonction par l'utilisateur, sélectionne en retour le motif de retour haptique associé et commande le module haptique 2 de sorte que le bouton haptique 9 fournisse le retour haptique présentant le module haptique associé.

Une fois la fonction sélectionnée, l'utilisateur peut choisir de régler un paramètre de la fonction à partir de la dalle tactile capacitive 4 configurée pour rétroéclairer les paramètres possibles associées à ladite fonction sélectionnée. Une fois capté l'instruction de l'utilisateur, elle fournit l'information du paramètre sélectionné à l'unité centrale 3. Celle-ci choisit parmi la librairie de motifs de retours haptiques, le motif de retour haptique associé audit paramètre et commande le module haptique 2 pour fournir le retour haptique présentant le motif de retour haptique dédié au paramètre choisi.

Comme illustré à la figure 2, le bouton haptique 9 et la dalle tactile capacitive 4 rétroéclairée sont agencés dans une face supérieure d'un châssis 13 (également visible figure 1). Le capteur de position 12 et le boitier 10 sont agencés dans une face inférieure du châssis 13 opposée à la face supérieure. Cet arrangement sur le châssis 13 permet une intégration à une console centrale 14 de l'habitacle ou à un élément de la planche de bord de l'habitacle.

Selon la finition souhaitée pour l'habitacle, la surface de la dalle tactile capacitive 4 comprend un revêtement dont la surface a subi des traitements de surface améliorant le rendu visuel du revêtement. Il est ainsi possible de donner un rendu de type métal brossé, ou anti trace de doigts sur la pièce plastique moulée imprimée. Selon une possibilité la fonction de rétroéclairage des zones de paramétrage 7 est activée lors du démarrage du moteur du véhicule et selon la fonction de l'habitacle sélectionnée.

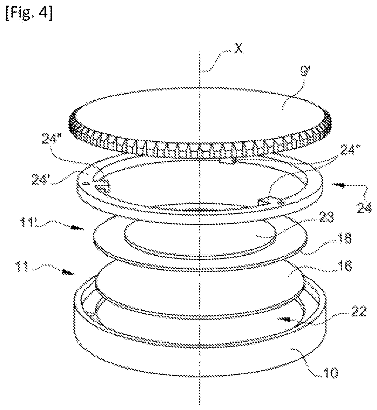

La figure 4 illustre en détail le module haptique 2 utilisé dans le dispositif de commande 100 de la présente invention. Bien que la forme illustrée diffère, la roue 9' représente l'élément d'interaction avec l'utilisateur correspondant au bouton haptique 9 des figures 1 à 2. Ce bouton haptique 9' est monté mobile en rotation autour de l'axe longitudinal X d'un boîtier 10 dans lequel sont logés deux résonateurs 11 et 11'. Le premier résonateur 11 comprend une première plaque 16 de la forme d'un disque et un actionneur 22 apte à générer des vibrations, tel qu'un actionneur 22 en matériau piézoélectrique ou magnétostrictif. Le deuxième résonateur 11' comporte une deuxième plaque 18 en forme de disque coaxial avec celui de la première plaque 16 et un actionneur 23. Les deux résonateurs 11, 11' s'étendent dans deux plans parallèles perpendiculaires à l'axe de rotation X. La première plaque 16 est immobilisée par rapport au boitier 2 et la deuxième plaque 18 est immobilisée par rapport au bouton haptique 9'. Les deux actionneurs 22 et 23 sont également fixés respectivement sur une face opposée des plaques 16 et 18.

Des moyens de placage élastiques 24 permettent d'appliquer une pression sur les plaques 16 et 18 les maintenant immobiles l'une par rapport à l'autre. Les actionneurs 22 et 23 sont reliés à une source d'énergie de sorte à les exciter à une fréquence de résonance telle que les résonateurs 11 et 11' sont mis en vibration dans une mode de vibration dans le plan. La fréquence de résonance est typiquement choisie entre 25 kHz et 200 kHz de sorte à générer une lubrification ultrasonique qui permet de libérer le mouvement de la plaque 18 vis-à-vis de la plaque 16 immobile et la rotation du bouton haptique 9'.

Dans les limites de ce qui est défini par les revendications, selon une disposition non illustrée, des modules haptiques à actionnement ultrasonique différents peuvent être utilisés dans le dispositif de commande 100 de la présente invention. Dans les limites mentionnées, il est notamment possible d'utiliser des modules haptiques 2 tels que ceux décrits dans le document FR3054072.

Selon une disposition non illustrée sur les figures, le module d'interface utilisateur est configuré pour communiquer avec un terminal de communication mobile et pour recevoir les sélections d'un utilisateur dudit terminal.

En utilisation, le conducteur du véhicule conduit le véhicule tout en choisissant d'actionner une fonction de l'habitacle et de sélectionner un des paramètres associés. Grâce au module d'interface 1 l'utilisateur sélectionne la fonction de la ventilation de l'air parmi un ensemble de fonctions disponibles. Automatiquement, l'unité centrale 3 est alertée et sélectionne en réponse le motif de retour haptique qui correspond à la fonction de la ventilation de l'air dans une librairie de motifs de retour haptiques. L'unité centrale 3 applique ensuite le motif de retour haptique dédié au module haptique 2 qui en réponse fourni à l'utilisateur le retour haptique présentant le motif de retour haptique de la ventilation de l'air. Le conducteur n'a pas besoin de vérifier que la fonction est bien sélectionnée de sorte que son attention est conservée sur sa conduite. Bien entendu, ceci est un exemple de sélection de fonctions parmi d'autres, le conducteur pouvant avoir accès à l'ensemble des fonctions disponibles dans l'habitacle.

Parallèlement à cette sélection de fonctions, les paramètres associés à la fonction de la ventilation de l'air sont retroéclairés sur la dalle tactile capacitive 4 de sorte que le conducteur peut sélectionner un paramètre de ladite fonction telle que la température. Le module d'interface utilisateur 1 communique le paramètre sélectionné à l'unité centrale 3 qui sélectionne dans la librairie des motifs de retours haptiques le motif de retour haptique dédié au choix de la température et transmet la commande au module haptique 2 afin de fournir le retour haptique présentant le motif de retour haptique par l'intermédairie du bouton haptique 9. Ainsi, lorsque le conducteur tourne le bouton haptique 9, le capteur de position 12 en informe l'unité centrale 3 qui commande l'excitation du résonnateur 11 pour générer des vibrations selon le motif de retour haptique correspondant. En retour, le conducteur reçoit une réponse par crantage dédié au choix de la température, permettant d'informer le conducteur que sa commande est bien prise en compte, sans diminuer son attention de la route.

Ainsi, le dispositif de commande 100 selon l'invention est simple à fabriquer et permet un retour haptique dédié à la fonction choisie dans l'habitacle ainsi qu'au paramètre de ladite fonction. Le dispositif de commande 100 reste néanmoins compact et facile à intégrer dans l'habillage 14 de l'habitacle.

Il va de soi que l'invention n'est pas limitée au mode de réalisation décrit ci-dessus à titre d'exemple mais qu'elle comprend, dans les limites de ce qui est défini par les revendications, tous les équivalents techniques et les variantes des moyens décrits ainsi que leurs combinaisons.

## Revendications

1. Dispositif de commande destiné à commander une fonction d'un habitacle de véhicule, le dispositif de commande comprenant :
- un module d'interface utilisateur (1) configuré pour une sélection par l'utilisateur d'une fonction parmi un ensemble de fonctions de l'habitacle,
- un unique module haptique (2) configuré pour fournir à un utilisateur un retour haptique parmi une pluralité de retours haptiques, et
- une unité centrale (3) configurée pour communiquer avec le module d'interface utilisateur (1) et le module haptique (2) comprenant une librairie de motifs de retours haptiques, chaque motif de retour haptique étant associé à une fonction, l'unité centrale étant configurée pour sélectionner, dans la librairie de motifs de retours haptiques, le motif de retour haptique associé à la fonction sélectionnée par l'utilisateur, et pour commander le module haptique (2) pour fournir le retour haptique présentant le motif de retour haptique sélectionné,
le module haptique (2) comprenant :
- un bouton haptique (9) monté mobile en rotation,
- un capteur de position (12) du bouton haptique (9) configuré pour communiquer une position angulaire et le sens de rotation du bouton haptique (9) à l'unité centrale (3), et
- deux résonateurs (11, 11') s'étendant perpendiculairement à un axe de rotation du bouton haptique, ayant une fréquence de résonance ultrasonique et configurés pour générer des vibrations dans le plan du résonateur par application d'un motif de retour haptique présentant une fréquence proche ou égale à la fréquence de résonance par l'unité centrale (3) en réponse aux informations transmises par le capteur de position (12), de sorte à conduire à une lubrification ultrasonique du bouton haptique (9).

2. Dispositif de commande selon la revendication 1, dans lequel le module d'interface utilisateur (1) est configuré pour choisir un paramètre parmi un ensemble de paramètres associés à ladite fonction sélectionnée, chaque motif de retour haptique étant associé à un paramètre de chacune des fonctions, l'unité centrale étant configurée pour sélectionner dans la librairie de motifs de retours haptiques, le motif de retour haptique associé au paramètre choisi par l'utilisateur et à commander le module haptique (2) pour fournir le retour haptique présentant le motif haptique sélectionné.

3. Dispositif de commande selon la revendication 2, dans lequel le module d'interface utilisateur (1) comprend une dalle tactile capacitive (4) retroéclairée configurée pour un rétroéclairage des paramètres de la fonction sélectionnée sur le module d'interface utilisateur (1).

4. Dispositif de commande selon la revendication 3, dans lequel la dalle tactile capacitive (4) comprend :
un film imprimé (5) de sorte à illustrer des zones de paramètrage (7) associées à des paramètres pour chacune des fonctions,
un guide de lumière (6) sous-jacent configuré pour réaliser un rétro-éclairage des zones de paramétrage (7), et
un capteur capacitif de localisation (8) à l'aplomb du film imprimé (5) et configuré pour sélectionner un paramètre par détection d'un doigt de l'utilisateur sur l'une des zones de paramètrage (7), le capteur capacitif de localisation (8) communiquant à l'unité centrale (3) le paramètre sélectionné

5. Dispositif de commande selon la revendication 3, dans lequel le bouton haptique (9) et la dalle tactile capacitive (4) retroéclairée sont agencés dans une face supérieure d'un châssis (13) et dans laquelle le capteur de position (12) et les résonateurs (11) sont agencés dans une face inférieure du châssis (13) opposée à la face supérieure, le châssis (13) étant configuré pour être intégré à une console centrale (14) de l'habitacle ou à un élément de planche de bord de l'habitacle.

6. Dispositif de commande selon l'une des revendications 1 à 5, dans lequel le module d'interface utilisateur (1) est configuré pour communiquer avec un terminal de communication mobile et pour recevoir les sélections d'un utilisateur dudit terminal.

7. Dispositif de commande selon la revendication 3, optionnellement en combinaison avec l'une des revendications 4 à 6, dans lequel la surface de la dalle tactile capacitive (4) comprend un revêtement dont la surface est configurée pour recevoir des traitements de surface améliorant le rendu visuel du revêtement tel qu'un rendu de type métal brossé, ou anti trace de doigts.

8. Procédé de conduite d'un véhicule comprenant un habitacle comportant une pluralité de fonctions et un dispositif de commande selon l'une des revendications 1 à 7, le procédé comprenant :
- une étape de sélection par un utilisateur d'une fonction parmi un ensemble de fonctions de l'habitacle, par l'intermédiaire du module d'interface utilisateur (1) du dispositif de commande,
- une étape de sélection par l'unité centrale (3) du motif de retour haptique associé à la fonction sélectionnée dans la librairie de motifs de retours haptiques,
- une étape de commande de l'unique module haptique (2) par l'unité centrale (3) de sorte à fournir un retour haptique à l'utilisateur présentant le motif de retour haptique sélectionné.

9. Procédé de conduite d'un véhicule selon la revendication 8, le procédé comprenant :
- une étape de sélection par un utilisateur d'un paramètre parmi un ensemble de paramètres associés à ladite fonction sélectionnée par l'intermédiaire du module d'interface utilisateur (1),
- une étape de sélection par l'unité centrale (3) d'un motif de retour haptique associé au paramètre sélectionné par l'utilisateur,
- une étape de commande du module haptique (2) par l'unité centrale (3) de sorte à fournir un retour haptique à l'utilisateur présentant le motif de retour haptique sélectionné.

## Patentansprüche

1. Steuervorrichtung, die dazu bestimmt ist, eine Funktion eines Fahrzeuginnenraums zu steuern, wobei die Steuervorrichtung Folgendes umfasst:
- ein Benutzerschnittstellenmodul (1), das für eine Auswahl einer Funktion aus einem Satz von Funktionen für den Innenraum durch den Benutzer konfiguriert ist,
- ein einzelnes haptisches Modul (2), das dazu konfiguriert ist, einem Benutzer ein haptisches Feedback aus einer Vielzahl von haptischen Feedbacks bereitzustellen, und
- eine Zentraleinheit (3), die dazu konfiguriert ist, mit dem Benutzerschnittstellenmodul (1) und dem haptischen Modul (2) zu kommunizieren, und eine Bibliothek von haptischen Feedbackmustern umfasst, wobei jedes haptische Feedbackmuster einer Funktion zugeordnet ist, wobei die Zentraleinheit dazu konfiguriert ist, aus der Bibliothek von haptischen Feedbackmustern das haptische Feedbackmuster auszuwählen, das der vom Benutzer ausgewählten Funktion zugeordnet ist, und das haptische Modul (2) zu steuern, um das haptische Feedback mit dem ausgewählten haptischen Feedbackmuster bereitzustellen,
wobei das haptische Module (2) Folgendes umfasst:
- einen haptischen Knopf (9), der drehbeweglich montiert ist,
- einen Positionssensor (12) des haptischen Knopfs (9), der dazu konfiguriert ist, eine Winkelposition und die Drehrichtung des haptischen Knopfs (9) an die Zentraleinheit (3) zu kommunizieren, und
- zwei Resonatoren (11, 11'), die sich senkrecht zu einer Drehachse des haptischen Knopfs erstrecken, eine Ultraschall-Resonanzfrequenz aufweisen und dazu konfiguriert sind, durch Anwendung eines haptischen Feedbackmusters, das eine Frequenz nahe oder gleich der Resonanzfrequenz aufweist, durch die Zentraleinheit (3) als Reaktion auf die vom Positionssensor (12) übertragenen Informationen Schwingungen auf der Ebene des Resonators zu erzeugen, um so zu einer Ultraschallschmierung des haptischen Knopfs (9) zu führen.

2. Steuervorrichtung nach Anspruch 1, wobei das Benutzerschnittstellenmodul (1) dazu konfiguriert ist, eine Einstellung aus einem Satz von der ausgewählten Funktion zugeordneten Einstellungen auszuwählen, wobei jedes haptische Feedbackmuster einer Einstellung jeder der Funktionen zugeordnet ist, wobei die Zentraleinheit dazu konfiguriert ist, aus der Bibliothek von haptischen Feedbackmustern das haptische Feedbackmuster auszuwählen, das der vom Benutzer ausgewählten Einstellung zugeordnet ist, und das haptische Modul (2) zu steuern, um das haptische Feedback mit dem ausgewählten haptischen Muster bereitzustellen.

3. Steuervorrichtung nach Anspruch 2, wobei das Benutzerschnittstellenmodul (1) einen kapazitiven Touchscreen (4) mit Hintergrundbeleuchtung umfasst, der für eine Hintergrundbeleuchtung der Einstellungen der ausgewählten Funktion auf dem Benutzerschnittstellenmodul (1) konfiguriert ist.

4. Steuervorrichtung nach Anspruch 3, wobei der kapazitive Touchscreen (4) Folgendes umfasst:
eine Folie (5), die so bedruckt ist, dass sie Einstellungsbereiche (7) verdeutlicht, die Einstellungen für jede der Funktionen zugeordnet sind,
einen darunter liegenden Lichtleiter (6), der dazu konfiguriert ist, eine Hintergrundbeleuchtung der Einstellungsbereiche (7) zu erzielen, und
einen kapazitiven Lokalisierungssensor (8), der senkrecht zur bedruckten Folie (5) liegt und dazu konfiguriert ist, eine Einstellung durch Erfassen eines Fingers des Benutzers auf einem der Einstellungsbereiche (7) auszuwählen, wobei der kapazitive Lokalisierungssensor (8) die ausgewählte Einstellung an die Zentraleinheit (3) übermittelt.

5. Steuervorrichtung nach Anspruch 3, wobei der haptische Knopf (9) und der kapazitive Touchscreen (4) mit Hintergrundbeleuchtung auf einer oberen Fläche eines Fahrgestells (13) angeordnet sind, und wobei der Positionssensor (12) und die Resonatoren (11) in einer unteren Fläche des Fahrgestells (13) gegenüber der oberen Fläche angeordnet sind, wobei das Fahrgestell (13) dazu konfiguriert ist, in eine Mittelkonsole (14) des Innenraums oder in ein Element des Armaturenbretts des Innenraums integriert zu sein.

6. Steuervorrichtung nach einem der Ansprüche 1 bis 5, wobei das Benutzerschnittstellenmodul (1) dazu konfiguriert ist, mit einem mobilen Kommunikationsendgerät zu kommunizieren und die Auswahlen eines Benutzers des Endgeräts zu empfangen.

7. Steuervorrichtung nach Anspruch 3, optional in Kombination mit einem der Ansprüche 4 bis 6, wobei die Oberfläche des kapazitiven Touchscreens (4) eine Beschichtung umfasst, deren Oberfläche dazu konfiguriert ist, Oberflächenbehandlungen zu erhalten, die das visuelle Erscheinungsbild der Beschichtung verbessern, wie etwa ein Erscheinungsbild vom Typ gebürstetes Metall, oder eine Fingerabdruckschutzbehandlung.

8. Verfahren zum Fahren eines Fahrzeugs, das einen Innenraum umfasst, der eine Vielzahl von Funktionen und eine Steuervorrichtung nach einem der Ansprüche 1 bis 7 aufweist, wobei das Verfahren Folgendes umfasst:
- einen Schritt des Auswählens einer Funktion aus einem Satz von Funktionen des Innenraums durch einen Benutzer mit Hilfe des Benutzerschnittstellenmoduls (1) der Steuervorrichtung,
- einen Schritt des Auswählens des haptischen Feedbackmusters, das der ausgewählten Funktion zugeordnet ist, aus der Bibliothek von haptischen Feedbackmustern durch die Zentraleinheit (3),
- einen Schritt des Steuerns des einzelnen haptischen Moduls (2) durch die Zentraleinheit (3), um ein haptisches Feedback, das das ausgewählte haptische Feedbackmuster aufweist, an den Benutzer bereitzustellen.

9. Verfahren zum Fahren eines Fahrzeugs nach Anspruch 8, wobei das Verfahren Folgendes umfasst:
- einen Schritt des Auswählens einer Einstellung aus einem Satz von der ausgewählten Funktion zugeordneten Einstellungen durch einen Benutzer mit Hilfe des Benutzerschnittstellenmoduls (1),
- einen Schritt des Auswählens eines haptischen Feedbackmusters, das einer durch den Benutzer ausgewählten Einstellung zugeordnet ist, durch die Zentraleinheit (3),
- einen Schritt des Steuerns des haptischen Moduls (2) durch die Zentraleinheit (3), um so dem Benutzer ein haptisches Feedback bereitzustellen, das das ausgewählte haptische Feedbackmuster aufweist.

## Claims

1. A control device intended to control a function of a vehicle passenger compartment, the control device comprising:
- a user interface module (1) configured for selection by the user of a function amongst a set of functions of the passenger compartment,
- a unique haptic module (2) configured to provide a user with a haptic feedback amongst a plurality of haptic feedbacks, and
- a central unit (3) configured to communicate with the user interface module (1) and the haptic module (2), comprising a library of haptic feedback patterns, each haptic feedback pattern being associated with a function, the central unit being configured to select, in the library of haptic feedback patterns, the haptic feedback pattern associated with the function selected by the user, and to control the haptic module (2) to provide the haptic feedback having the selected haptic feedback pattern,
the haptic module (2) comprising:
- a haptic button (9) mounted movable in rotation,
- a position sensor (12) of the haptic button (9) configured to communicate an angular position and the direction of rotation of the haptic button (9) to the central unit (3), and
- two resonators (11, 11') extending perpendicularly to an axis of rotation of the haptic button, having an ultrasonic resonance frequency and configured to generate vibrations in the plane of the resonator by application of a haptic feedback pattern having a frequency close or equal to the resonance frequency by the central unit (3) in response to the information transmitted by the position sensor (12), so as to cause an ultrasonic lubrication of the haptic button (9).

2. The control device according to claim 1, wherein the user interface module (1) is configured to select a parameter amongst a set of parameters associated with said selected function, each haptic feedback pattern being associated with a parameter of each of the functions, the central unit being configured to select in the library of haptic feedback patterns, the haptic feedback pattern associated with the parameter selected by the user and to control the haptic module (2) to provide the haptic feedback having the selected haptic pattern.

3. The control device according to claim 2, wherein the user interface module (1) comprises a backlit capacitive touchpad (4) configured for backlighting the parameters of the selected function on the user interface module (1).

4. The control device according to claim 3, wherein the capacitive touchpad (4) comprises:
a printed film (5) so as to illustrate setting areas (7) associated with parameters for each of the functions,
an underlying light guide (6) configured to ensure backlighting of the setting areas (7), and
a capacitive location sensor (8) overhanging the printed film (5) and configured to select a parameter by detecting a finger of the user on one of the setting areas (7), the capacitive location sensor (8) communicating the selected parameter to the central unit (3).

5. The control device according to claim 3, wherein the haptic button (9) and the backlit capacitive touchpad (4) are arranged in an upper face of a frame (13) and wherein the position sensor (12) and the resonators (11) are arranged in a lower face of the frame (13) opposite to the upper face, the frame (13) being configured to be integrated with a center console (14) of the passenger compartment or with a dashboard element of the passenger compartment.

6. The control device according to one of claims 1 to 5, wherein the user interface module (1) is configured to communicate with a mobile communication terminal and to receive the selections of a user of said terminal.

7. The control device according to claim 3, optionally in combination with one of claims 4 to 6, wherein the surface of the capacitive touchpad (4) comprises a coating whose surface is configured to receive surface treatments improving the visual aspect of the coating such as a brushed, or anti-fingerprint, metal-type aspect.

8. A method of driving a vehicle comprising a passenger compartment including a plurality of functions and a control device according to one of claims 1 to 7, the method comprising:
- a step of a selecting by a user a function amongst a set of functions of the passenger compartment, via the user interface module (1) of the control device,
- a step of selecting by the central unit (3) the haptic feedback pattern associated with the selected function in the library of haptic feedback patterns,
- a step of controlling the unique haptic module (2) by the central unit (3) so as to provide a haptic feedback to the user having the selected haptic feedback pattern.

9. The method for driving a vehicle according to claim 8, the method comprising:
- a step of selecting by a user a parameter amongst a set of parameters associated with said selected function via the user interface module (1),
- a step of selecting by the central unit (3) a haptic feedback pattern associated with the parameter selected by the user,
- a step of controlling the haptic module (2) by the central unit (3) so as to provide a haptic feedback to the user having the selected haptic feedback pattern.
